# EUROPEAN PATENT SPECIFICATION

(11) **EP 3 019 756 B1**
(45) Date of publication and mention of the grant of the patent: **25.10.2017**
(21) Application number: 14841313.1
(22) Date of filing: 02.07.2014
(51) Int. Cl.: F16B 17/00

(54) **STRUCTURAL ASSEMBLY AND METHOD OF ASSEMBLY THEREOF**
STRUKTURELLE ANORDNUNG UND MONTAGEVERFAHREN DAFÜR
ENSEMBLE STRUCTURAL ET SON PROCÉDÉ D'ASSEMBLAGE

(30) Priority: 29.08.2013 US 201361871475 P
(43) Date of publication of application: 18.05.2016
(60) Divisional application: 16207529.5
(73) Proprietor: I.G. Cardboard Technologies Ltd., 6157002 Tel Aviv (IL)
(72) Inventor: GAFNI, Izhar, 38855 Ahituv (IL)
(74) Representative: Boult Wade Tennant
(86) International application number: PCT/IL2014/050595
(87) International publication number: WO 2015/029010

(56) References cited:
- WO-A1-2014/061012
- FR-A1- 2 869 962
- US-A- 4 261 665
- US-A- 5 468 086
- US-A1- 2011 133 427
- US-A1- 2012 034 029

## Description

### TECHNOLOGICAL FIELD

The invention relates to structural assemblies and method of assembly thereof, in particular, cardboard structures used for human powered vehicles.

### GENERAL DESCRIPTION

There is known from prior art document US 2012/0034029 A1 an assembly comprising a first assembly member and a second assembly member attached to one another via a connection arrangement comprising a first connector element and a second connector element; the first connector element having a first segment fixedly received within the first assembly member and a second segment received within the second assembly member; the second connector element having at least a connecting segment received within said second assembly member; wherein the second segment of the first connector element comprises one or more recesses configured for receiving therein and interlocking with a corresponding portion of the connecting segment of the second connector element to thereby prevent detachment between the first assembly member and the second assembly member by restricting retraction of the first connector element out of the second assembly member.

According to a first aspect of the invention, as defined in claim 1, the first assembly member is a head tube of a bicycle and the second assembly member is a frame of the bicycle, and both assembly members are made of cardboard.

In accordance with another aspect of the present application, according to claim 17, there is provided a method for assembly of a structure comprising the steps of:
- providing a first assembly member and a second assembly member according to the first aspect of the subject matter of the present application;
- fitting the first assembly member with one or more first connectors so as to have a first segment received within the first assembly member and a second segment projecting from the first assembly member; at least one of the one or more first connectors comprising a recess;
- inserting the second segment of the one or more first connectors into the second member so that the one or more recesses is received therein;
- inserting one or more second connectors into the second assembly member to be received within the corresponding one or more recesses of the first connectors.
Advantageous features of the invention are defined in dependent claims 2-16 and 18-20.

### BRIEF DESCRIPTION OF THE DRAWINGS

In order to better understand the invention as disclosed herein and to exemplify how it may be carried out in practice, embodiments will now be described, by way of non-limiting example only, with reference to the accompanying drawings, in which:

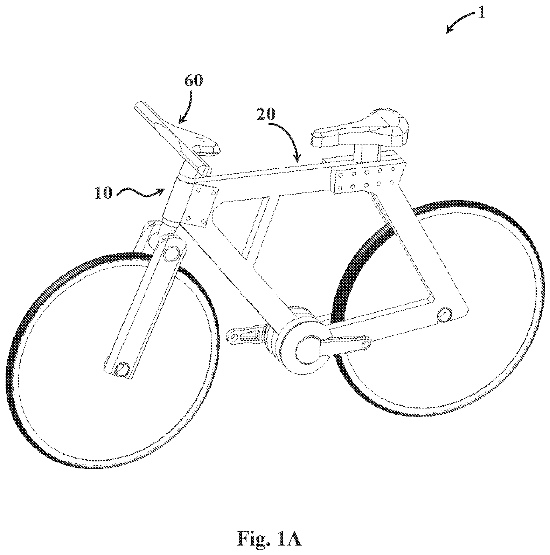

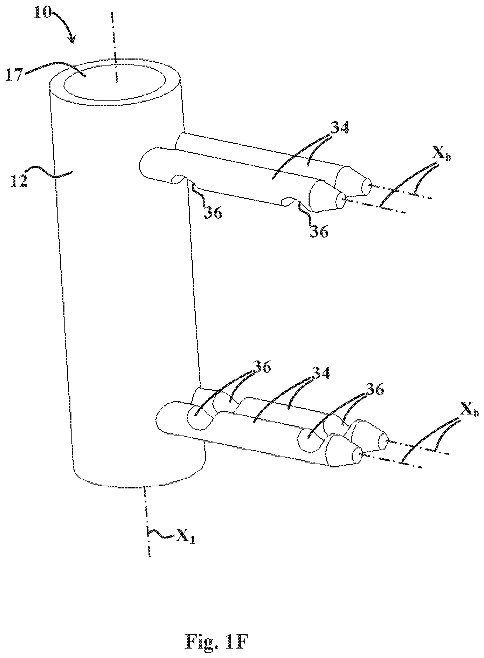

Fig. 1A is a schematic isometric view of a bicycle comprising the assembly of the subject matter of the present application;

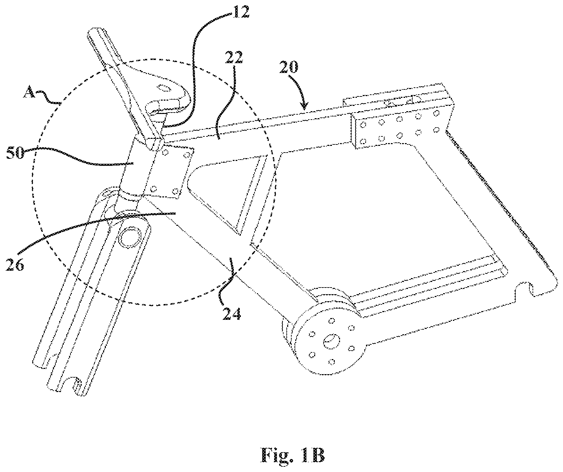

**Fig. 1B** is a schematic isometric view of certain elements of the assembly shown in Fig. 1A;

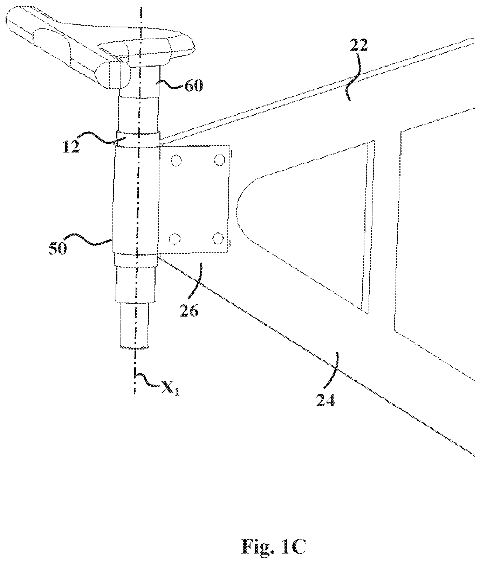

**Fig. 1C** is a schematic enlarged view of detail A shown in Fig. 1B;

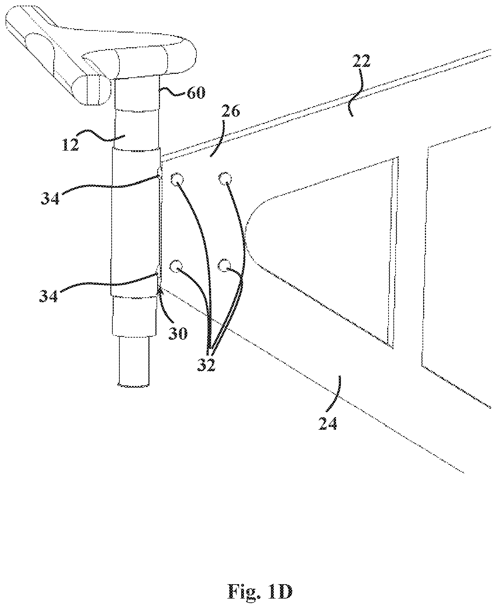

**Figs. 1D** to **1F** are schematic isometric view of detail A shown in Fig. 1C, with some of the components gradually stripped away for a clearer presentation of the assembly; and

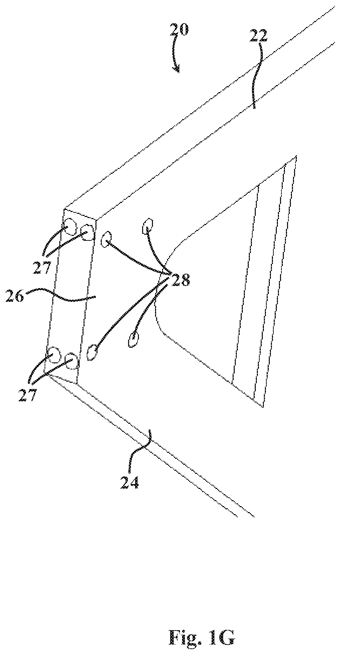

**Fig. 1G** is a schematic isometric view of the base frame.

### DETAILED DESCRIPTION OF EMBODIMENTS

Attention is first drawn to **Fig. 1A** in which a bicycle is shown, generally designated **1,** and comprising a base frame 20 made of cardboard, a handlebar **60** and head tube **10** articulated to the base frame **20** by the unique assembly of the present application. The head tube is also made of cardboard and is configured for receiving therethrough a shaft of the handlebar **60** to allow it to pivot in order to steer the bicycle **1.**

It is noted that while in standard bicycles the head tube is usually integrally formed with the base frame (by welding), in the present design, the head tube **10** is a separate component which is assembly together with the base frame **20.**

As previously described in US 2011/0133427 to the Applicant, bicycle is made of cardboard, and the above assembly is particularly useful for such a type of bicycles. The frame elements may be of the kind disclosed in Applicant's PCT applications WO 2014/061012 and PCT/IL2013/050823.

With particular reference being made to **Figs. 1D** to **1F****,** the head tube **10** comprises a hollow tube **12** which extends along a longitudinal axis X₁ which is generally of vertical orientation when the bicycle is positioned on a reference surface such as the ground, the cavity **17** of the tube being configured for receiving therein the handlebar shaft.

Attention is now drawn to **Fig. 1G** in which the base frame **20** is shown comprising a crossbar **22,** a down tube **24** and a front frame portion **26.** The front frame portion **26** comprises a first set of receiving apertures **27** configured for receiving therein a corresponding segment of the main connecting elements **34** and a second set of receiving apertures **28** configured for receiving therein the auxiliary connecting elements **32.**

It is noted that the first receiving apertures **27** extend generally along the plane defined by the base frame **10** (i.e. defined by the crossbar **22** and down tube **24**) while the second receiving apertures **28** extend perpendicular to the above defined plane and pass through the front frame portion **26.**

Reverting now to **Figs. 1D** to **1F****,** in assembly, the head tube **10** is provided with four main connecting elements **34** which are fitted to be partially received within the hollow tube **12** and protrude therefrom in a direction generally perpendicular to the main axis X₁. Each of the four main connecting elements **34** has a longitudinal axis Xb and comprises two recesses **36** formed at two spaced apart location along the longitudinal axis Xb.

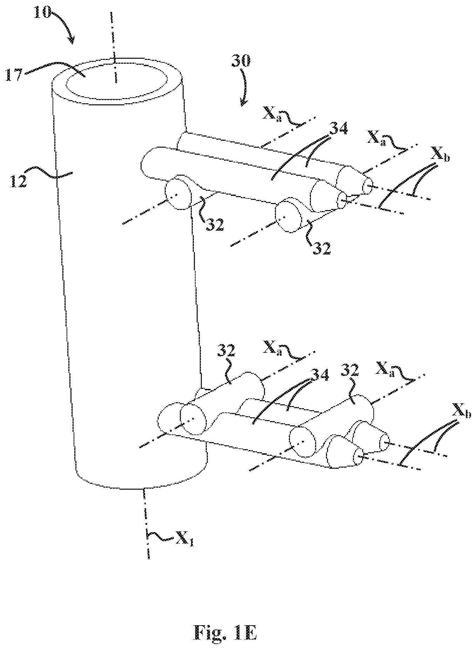

The main connecting elements **34** are configured for engagement with four corresponding auxiliary connecting elements **32** (shown **Fig. 1E**) via recesses **36** of a circular cross-section which are configured to be complimentary to the cross-section of the auxiliary connecting elements **32** which should be received therein.

It is noted that while the connecting elements **32, 34** described above are shown to have a circular cross-section, this is not compulsory and connecting elements of other cross-sections (e.g. triangular, rectangular, oval etc.) can be contemplated. It should also be appreciated that the cross-sectional shape the connecting elements can differ from one connecting element to the other, with the sole requirement being that the cross-sectional shape of the recesses is designed to be complimentary to the cross-sectional shape of that connecting element with which it is engaged.

In the following stage of assembly, the head tube **10** together with the main connecting elements **34** is articulated to the base frame **20** by inserting the main connecting elements **34** into the first receiving apertures **27** until the recesses **36** are aligned with the second receiving apertures **28.** In this position, the auxiliary connecting elements **32** can be inserted into the second receiving apertures **28,** passing through the front frame portion **26.**

Once inserted, a portion of each of the auxiliary connecting elements **32** are received within the recesses **36** of the first connecting element **34,** thereby preventing extraction of the first connecting elements **34** from the front frame portion **26** along the longitudinal axis Xb, and consequently, preventing disengagement between the entire head tube **10** and the base frame **20.**

In order to secure the connection between the base frame **20** and the head tube **10,** a cover member **50** is provided embracing both the head tube **10** and a part of the front frame portion **26,** completely covering the second receiving apertures **28,** thereby preventing the auxiliary connecting elements **32** from being extracted from the front frame portion **26** along the longitudinal axis Xa.

The cover member **50** can be attached to the head tube **10** and base frame **20** by any known way, e.g. by an adhesive.

It is appreciated that the above described assembly can be provided not only between the head tube **10** and the base frame **20** of the bicycle **1** and is applicable for various assemblies of the bicycle **1.**

Those skilled in the art to which this invention pertains will readily appreciate that numerous changes, variations, and modifications can be made without departing from the scope of the invention defined by the appended claims.

## Claims

1. An assembly comprising a first assembly member (10) and a second assembly member (20) attached to one another via a connection arrangement comprising a first connector element (34) and a second connector element (32); the first connector element (34) having a first segment fixedly received within the first assembly member (10) and a second segment received within the second assembly member (20); the second connector element (32) having at least a connecting segment received within said second assembly member (20); wherein the second segment of the first connector element (34) comprises one or more recesses (36) configured for receiving therein and interlocking with a corresponding portion of the connecting segment of the second connector element (32) to thereby prevent detachment between the first assembly member and the second assembly member by restricting retraction of the first connector element (34) out of the second assembly member (20), **characterized in that** the first assembly member is a head tube of a bicycle (10) and the second assembly member is a frame of the bicycle (20), and both assembly members are made of cardboard.

2. The assembly of claim 1, wherein each of the first connectors elements (34) extends along a longitudinal axis and said interlocking blocks axial retraction thereof.

3. The assembly of claim 1, wherein the second connector elements (32) are elongated, the axes of the first (34) and the second (32) connector elements or at least their imaginary extensions intersect one another or have at least one projection in which they appear to intersect one another.

4. The assembly of claim 1 or 2, wherein the cross-sectional shape of the one or more recesses (36) corresponds in shape and size to the cross-sectional shape of the connector element (32) received therein.

5. The assembly of any one of claims 1-3, wherein the cross-sectional shape of the connector elements taken perpendicular to the longitudinal axis is a regular polygonal shape.

6. The assembly of any one of claims 1-3, wherein the cross-sectional shape of the connector elements taken perpendicular to the longitudinal axis is circular or oval.

7. The assembly of any one of claims 1-6, wherein the first connector element (34) projects from the first assembly member while the second connector element (32) is fully received within the second assembly member (20).

8. The assembly of claim 7, wherein the first connector element (34) is formed with a recess configured for receiving therein a portion of the second connector element (32).

9. The assembly of any one of claims 1-8, wherein the first assembly member (10) is provided with a set of first connector elements (34) and the second assembly member (20) is provided with a corresponding set of second connector elements (32) configured for engagement with the set of first connector elements (34).

10. The assembly of any one of claims 1-9, wherein at least one of the first (34) and the second (32) connector elements are made of organic material.

11. The assembly of claim 10, wherein the organic material is wood.

12. The assembly of claim 10, wherein the organic material is cardboard.

13. The assembly of any one of claims 1-12, wherein the second assembly member (20) is pre-formed with a first set of apertures (27) configured for receiving therein a set of first connector elements (34) and a second set of apertures (28) configured for receiving therein a set of second connector elements (32).

14. The assembly of any one of claims 1-12, wherein the second connector elements (32) are configured for forming apertures (28) within the second assembly member (20) during assembly.

15. The assembly of any one of claims 1-12, wherein, when the connector elements are interlocked, at least the connector elements that are formed with the recess (36) are prevented from displacement along a longitudinal axis thereof.

16. The assembly of any one of claims 1-15, wherein the assembly is provided with a cover member (50) embracing the first (10) and the second (20) assembly member to restrict movement of at least one of the first (34) and of the second (32) connector elements.

17. A method for assembly of a structure comprising the steps of:
- providing a head tube of a bicycle (10) and a frame of the bicycle (20), each of the head tube (10) and the frame (20) being made of cardboard;
- fitting the head tube (10) with one or more first connector elements (34) so as to have a first segment received within the head tube (10) and a second segment projecting from the head tube (10); at least one of the one or more first connector elements (34) comprising a recess (36);
- inserting the second segment of the one or more first connector elements (34) into the frame (20) so that the one or more recesses (36) is received therein;
- inserting one or more second connector elements (32) into the frame to be received within the corresponding one or more recesses (36) of the first connector elements (34).

18. The method of claim 17, including pre-forming apertures (27, 28) at least within the frame.

19. The method of claim 17 or 18, wherein the first connector elements (34) each have a first longitudinal axis and the second connector elements (32) each have a second longitudinal axis so that in assembly, the first axis and the second axis intersect one another or have at least one view in which they appear to intersect one another.

20. The method of any one of claims 17-19, including providing a cover member (50) embracing a part of the head tube (10) and of the frame (20).

## Patentansprüche

1. Baugruppe, die ein erstes Baugruppenelement (10) und ein zweites Baugruppenelement (20) aufweist, die über eine Verbindungsanordnung miteinander verbunden sind, die ein erstes Verbindungselement (34) und ein zweites Verbindungselement (32) umfasst, wobei das erste Verbindungselement (34) ein erstes Segment, das in dem ersten Baugruppenelement (10) fixiert aufgenommen ist, und ein zweites Segment aufweist, das in dem zweiten Baugruppenelement (20) aufgenommen ist, wobei das zweite Verbindungselement (32) zumindest ein in dem zweiten Baugruppenelement (20) aufgenommenes Verbindungssegment aufweist, wobei das zweite Segment des ersten Verbindungselements (34) eine oder mehrere Ausnehmungen (36) aufweist, die ausgebildet sind, einen entsprechenden Teil des Verbindungssegments des zweiten Verbindungselements (32) darin in einem Formschluss aufzunehmen, um dadurch ein Trennen des ersten Baugruppenelements und des zweiten Baugruppenelements voneinander zu verhindern, indem ein Zurückziehen des ersten Verbindungselements (34) aus dem zweiten Baugruppenelement (20) heraus eingeschränkt wird, **dadurch gekennzeichnet, dass** es sich bei dem ersten Baugruppenelement um ein Fahrradsteuerrohr (10) und bei dem zweiten Baugruppenelement um einen Fahrradrahmen (20) handelt und beide Baugruppenelemente aus Karton gefertigt sind.

2. Baugruppe nach Anspruch 1, wobei sich jedes der ersten Verbindungselemente (34) entlang einer Längsachse erstreckt und der Formschluss ein axiales Zurückziehen dieser blockiert.

3. Baugruppe nach Anspruch 1, wobei die zweiten Verbindungselemente (32) länglich sind und die Achsen der ersten (34) und der zweiten (32) Verbindungselemente oder zumindest deren imaginären Fortführungen sich überkreuzen oder zumindest eine Projektion aufweisen, in der sie sich zu überkreuzen scheinen.

4. Baugruppe nach Anspruch 1 oder 2, wobei die Querschnittsform der einen oder der mehreren Ausnehmungen (36) in Form und Größe der Querschnittsform des darin aufgenommenen Verbindungselements (32) entspricht.

5. Baugruppe nach einem der Ansprüche 1 bis 3, wobei die Querschnittsform der Verbindungselemente senkrecht zur Längsachse eine regelmäßige polygonale Form ist.

6. Baugruppe nach einem der Ansprüche 1 bis 3, wobei die Querschnittsform der Verbindungselemente senkrecht zur Längsachse rund oder oval ist.

7. Baugruppe nach einem der Ansprüche 1 bis 6, wobei das erste Verbindungselement (34) aus dem ersten Baugruppenelement ragt, wohingegen das zweite Verbindungselement (32) vollständig in dem zweiten Baugruppenelement (20) aufgenommen ist.

8. Baugruppe nach Anspruch 7, wobei das erste Verbindungselement (34) mit einer Ausnehmung ausgeführt ist, die zum Aufnehmen des zweiten Verbindungselements (32) ausgebildet ist.

9. Baugruppe nach einem der Ansprüche 1 bis 8, wobei das erste Baugruppenelement (10) einen Satz erster Verbindungselemente (34) aufweist und das zweite Baugruppenelement (20) einen entsprechenden Satz zweiter Verbindungselemente (32) aufweist, die zum Eingriff in den Satz von ersten Verbindungselementen (34) ausgebildet sind.

10. Baugruppe nach einem der Ansprüche 1 bis 9, wobei das erste (34) und/oder das zweite (32) Verbindungselement aus einem organischen Material hergestellt sind.

11. Baugruppe nach Anspruch 10, wobei es sich bei dem organischen Material um Holz handelt.

12. Baugruppe nach Anspruch 10, wobei es sich bei dem organischen Material um Karton handelt.

13. Baugruppe nach einem der Ansprüche 1 bis 12, wobei das zweite Baugruppenelement (20) mit einem ersten Satz von Öffnungen (27), die zum Aufnehmen eines Satzes von ersten Verbindungselementen (34) ausgebildet sind, und einem zweiten Satz von Öffnungen (28) vorgefertigt ist, die zum Aufnehmen eines Satzes von zweiten Verbindungselementen (32) ausgebildet sind.

14. Baugruppe nach einem der Ansprüche 1 bis 12, wobei die zweiten Verbindungselemente (32) ausgebildet sind, während der Montage in dem zweiten Baugruppenelement (20) Öffnungen (28) auszubilden.

15. Baugruppe nach einem der Ansprüche 1 bis 12, wobei bei einem Formschluss der Verbindungselemente verhindert wird, dass sich zumindest die Verbindungselemente, die mit der Ausnehmung (36) ausgeführt sind, entlang deren Längsachse verschieben können.

16. Baugruppe nach einem der Ansprüche 1 bis 15, wobei die Baugruppe mit einem Abdeckelement (50) ausgestattet ist, das das erste (10) und das zweite (20) Baugruppenelement umgreift, um eine Bewegung des ersten (34) und/oder des zweiten (32) Verbindungselements zu begrenzen.

17. Verfahren zur Montage einer Struktur, das Schritte aufweist zum:
- Bereitstellen eines Fahrradsteuerrohrs (10) und eines Fahrradrahmens (20), wobei das Steuerrohr (10) und der Rahmen (20) aus Karton gefertigt sind;
- Ausstatten des Steuerrohrs (10) mit einem oder mehreren Verbindungselementen (34) so, dass ein erstes Segment in dem Steuerrohr (10) aufgenommen ist und ein zweites Segment aus dem Steuerrohr (10) ragt, wobei zumindest eines des einen oder der mehreren ersten Verbindungselemente (34) eine Ausnehmung (36) aufweist;
- Einsetzten des zweiten Segments des einen oder der mehreren ersten Verbindungselemente (34) in den Rahmen (20), sodass die eine oder die mehreren Ausnehmungen (36) darin aufgenommen sind;
- Einsetzten von einem oder von mehreren zweiten Verbindungselementen (32) in den Rahmen, damit diese in dem entsprechenden einen oder den entsprechenden mehreren Ausnehmungen (36) der ersten Verbindungselemente (34) aufgenommen werden.

18. Verfahren nach Anspruch 17, das umfasst, zumindest in dem Rahmen Öffnungen (27, 28) vorzufertigen.

19. Verfahren nach einem der Ansprüche 17 oder 18, wobei die ersten Verbindungselemente (34) jeweils eine erste Längsachse und die zweiten Verbindungselemente (32) jeweils eine zweite Längsachse aufweisen, sodass die erste und die zweite Achse im montierten Zustand einander überkreuzen oder sich in zumindest einer Ansicht zu überkreuzen scheinen.

20. Verfahren nach einem der Ansprüche 17 bis 19, das umfasst, ein Abdeckelement (50) vorzusehen, das einen Teil des Steuerrohrs (10) und des Rahmens (20) umgreift.

## Revendications

1. Ensemble comprenant un premier élément d'assemblage (10) et un second élément d'assemblage (20) reliés l'un à l'autre via un agencement de connexion comprenant un premier élément connecteur (34) et un second élément connecteur (32) ; le premier élément connecteur (34) ayant un premier segment reçu de manière fixe dans le premier élément d'assemblage (10) et un second élément reçu dans le second élément d'assemblage (20) ; le second élément connecteur (32) ayant au moins un segment de connexion reçu dans ledit second élément d'assemblage (20) ; dans lequel le second segment du premier élément connecteur (34) comporte un ou plusieurs évidements (36) configurés pour y recevoir et pour un verrouillage mutuel avec une partie correspondante du segment de connexion du second élément connecteur (32) pour empêcher ainsi une séparation entre le premier élément d'assemblage et le second élément d'assemblage en limitant un retrait du premier élément connecteur (34) à l'extérieur du second élément d'assemblage (20), **caractérisé en ce que** le premier élément d'assemblage est un tube de direction d'une bicyclette (10) et le second élément d'assemblage est un cadre de la bicyclette (20), et les deux éléments d'assemblage sont réalisés en carton.

2. Ensemble selon la revendication 1, dans lequel chacun des premiers éléments connecteurs (34) s'étend le long d'un axe longitudinal, et ledit verrouillage mutuel bloque un retrait axial de ceux-ci.

3. Ensemble selon la revendication 1, dans lequel les seconds éléments connecteur (32) sont allongés, les axes des premier (34) et second (32) éléments connecteurs ou au moins leurs prolongements imaginaires se recoupent mutuellement, ou ont au moins une projection dans laquelle ils apparaissent se recouper mutuellement.

4. Ensemble selon la revendication 1 ou 2, dans lequel la forme de coupe transversale des un ou plusieurs évidements (36) correspond en forme et en taille à la forme de coupe transversale de l'élément connecteur (32) qui y est reçu.

5. Ensemble selon l'une quelconque des revendications 1 à 3, dans lequel la forme de coupe transversale des éléments connecteurs prise perpendiculairement à l'axe longitudinal est une forme de polygone régulier.

6. Ensemble selon l'une quelconque des revendications 1 à 3, dans lequel la forme de coupe transversale des éléments connecteurs prise perpendiculairement à l'axe longitudinal est circulaire ou ovale.

7. Ensemble selon l'une quelconque des revendications 1 à 6, dans lequel le premier élément connecteur (34) fait saillie à partir du premier élément d'assemblage tandis que le second élément connecteur (32) est reçu complètement dans le second élément d'assemblage (20).

8. Ensemble selon la revendication 7, dans lequel le premier élément connecteur (34) est formé avec un évidement configuré pour y recevoir une partie du second élément connecteur (32).

9. Ensemble selon l'une quelconque des revendications 1 à 8, dans lequel le premier élément d'assemblage (10) est muni d'un ensemble de premiers éléments connecteurs (34), et le second élément d'assemblage (20) est muni d'un ensemble correspondant de seconds éléments connecteurs (32) configuré pour une mise en prise avec l'ensemble de premiers éléments connecteurs (34).

10. Ensemble selon l'une quelconque des revendications 1 à 9, dans lequel au moins un des premiers (34) et seconds (32) éléments connecteurs est constitué d'un matériau organique.

11. Ensemble selon la revendication 10, dans lequel le matériau organique est du bois.

12. Ensemble selon la revendication 10, dans lequel le matériau organique est du carton.

13. Ensemble selon l'une quelconque des revendications 1 à 12, dans lequel le second élément d'assemblage (20) est préformé avec un premier ensemble d'ouvertures (27) configuré pour y recevoir un ensemble de premiers éléments connecteurs (34) et un second ensemble d'ouvertures (28) configuré pour y recevoir un ensemble de seconds éléments connecteurs (32)

14. Ensemble selon l'une quelconque des revendications 1 à 12, dans lequel les seconds éléments connecteurs (32) sont configurés pour former des ouvertures (28) dans le second élément d'assemblage (20) pendant un assemblage.

15. Ensemble selon l'une quelconque des revendications 1 à 12, dans lequel, lorsque les éléments connecteurs sont verrouillés mutuellement, au moins les éléments connecteurs qui sont formés avec les évidements (36) sont empêchés de se déplacer le long d'un axe longitudinal de ceux-ci.

16. Ensemble selon l'une quelconque des revendications 1 à 15, dans lequel l'assemblage est muni d'un élément de recouvrement (50) embrassant les premier (10) et second (20) éléments d'assemblage pour empêcher un déplacement d'au moins un des premiers (34) et des seconds (32) éléments connecteurs.

17. Procédé d'assemblage d'une structure comprenant les étapes consistant à :
- fournir un tube de direction d'une bicyclette (10) et un cadre de la bicyclette (20), chacun du tube de direction (10) et du cadre (20) étant réalisé en carton ;
- raccorder le tube de direction (10) à un ou plusieurs premiers éléments connecteurs (34) de manière à avoir un premier segment reçu dans le tube de direction (10) et un second segment faisant saillie à partir du tube de direction (10) ; au moins un des un ou plusieurs premiers éléments connecteurs (34) comprenant un évidement (36) ;
- insérer le second segment des un ou plusieurs premiers éléments connecteurs (34) dans le cadre (20) de sorte que les un ou plusieurs évidements (36) y soient reçus ;
- insérer un ou plusieurs seconds éléments connecteurs (32) dans le cadre pour être reçu (s) dans les un ou plusieurs évidements correspondants (36) des premiers éléments connecteurs (34).

18. Procédé selon la revendication 17, comprenant une formation préalable d'ouvertures (27, 28) au moins à l'intérieur du cadre.

19. Procédé selon la revendication 17 ou 18, dans lequel les premiers éléments connecteurs (34) ont chacun un premier axe longitudinal, et les seconds éléments connecteurs (32) ont chacun un second axe longitudinal de sorte qu'au cours d'un assemblage, le premier axe et le second axe se recoupe mutuellement ou ont au moins une vue dans laquelle ils apparaissent se recouper mutuellement.

20. Procédé selon l'une quelconque des revendications 17 à 19, comprenant la fourniture d'un élément de recouvrement (50) embrassant une partie du tube de direction (10) et du cadre (20).
